# EUROPÄISCHE PATENTSCHRIFT

(11) **EP 2 996 864 B1**
(45) Veröffentlichungstag und Bekanntmachung des Hinweises auf die Patenterteilung: **03.10.2018**
(21) Anmeldenummer: 14725012.0
(22) Anmeldetag: 15.05.2014
(51) Int. Cl.: B29C 65/04, B29L 31/58, B29L 31/00

(54) **VERFAHREN UND VORRICHTUNG ZUM AUFBRINGEN VON ZIERSTREIFEN AUF EINEN SITZBEZUG**
METHOD AND DEVICE FOR APPLYING DECORATIVE STRIPS TO A SEAT COVER
PROCÉDÉ ET DISPOSITIF POUR APPLIQUER DES BANDES DÉCORATIVES SUR UNE GARNITURE DE SIÈGE

(30) Priorität: 15.05.2013 DE 102013008293
(43) Veröffentlichungstag der Anmeldung: 23.03.2016
(73) Patentinhaber: Adient Luxembourg Holding S.à r.l., 1855 Luxembourg (LU)
(72) Erfinder: MONDELAERS, Niels, 2430 Laakdal (BE); CASTAGNA, Francesco, 7021 Havre (BE); RIHOVÁ, Michaela, 38601 Strakonice (CZ)
(74) Vertreter: Siekmann, Gunnar
(86) Internationale Anmeldenummer: PCT/EP2014/001310
(87) Internationale Veröffentlichungsnummer: WO 2014/183875

(56) Entgegenhaltungen:
- FR-A1- 2 534 793
- GB-A- 2 278 082
- JP-A- 2000 237 280
- US-A- 3 060 653

## Beschreibung

Die Erfindung betrifft ein Verfahren und eine Vorrichtung zum Aufbringen von Zierstreifen auf einen Sitzbezug durch Hochfrequenzschweißen mit zwei Werkzeughälften, von denen eine Elektroden aufweist mit den Merkmalen des Oberbegriffs des Patentanspruchs 1 beziehungsweise den Merkmalen des Oberbegriffs des Patentanspruchs 4.

Es ist bekannt, mit Hilfe des Hochfrequenzschweißens Zierstreifen oder andere Muster auf Sitzbezüge, insbesondere textile Sitzbezüge und auch Autositze aufzubringen. Ein gattungsgemäßes Verfahren ist aus der FR 2 534 793 A1 bekannt.

Eine Vorrichtung, die geeignet ist zum Aufbringen von mindestens einem Zierstreifen auf einen Sitzbezug durch Hochfrequenzschweißen mit zwei Werkzeughälften, von denen eine mindestens eine Elektrode aufweist, wobei die erste Werkzeughälfte mindestens zwei parallel zueinander ausgerichtete Elektroden aufweist und die in ihrer Breite an die Breite der aufzubringenden Zierstreifen angepasst sind und wobei zwischen den Elektroden und parallel an den Außenseiten der Elektroden parallel ausgerichtete Isolatoren angeordnet sind, ist aus der US 3,060,653 A bekannt.

Aus der GB 2 278 082 A ist ein Verfahren und eine Vorrichtung zur Ausbildung eines Bezugs für einen Autositz bekannt. Hier wird das Aufbringen und Zusammenpressen von mehrlagigen Sitzbezügen zwischen einem oberen Formelement und einem unteren Formelement beschrieben.

JP 2000 237280 A beschreibt die Herstellung eines Beutels für medizinische Zwecke. Ein Mundstück kann durch ein Schweißverfahren an diesem Beutel angesetzt werden.

Eine weitere Vorrichtung ist aus der DE 36 12 025 C2 bekannt. Dort wird ein U-förmiger Zierstreifen in eine Führungsrille eingelegt. Die Führungsrille wird von einem Formteil gehalten und an den Sitzbezug herangeführt. In das Führungsteil wird dann von unten die Elektrode hineingedrückt, die den Zierstreifen im Führungsteil gegen den Sitzbezug drückt.

Die genaue Justierung insbesondere bei mehreren parallel verlaufenden Zierstreifen ist nur mit vergleichsweise großem Aufwand möglich.

Der Erfindung liegt die Aufgabe zugrunde, ein Verfahren und eine Vorrichtung der eingangs genannten Art zu schaffen, mit der mehrere Zierstreifen positionsgenau zueinander auf einem Sitzbezug aufgebracht werden können.

Die Lösung dieser Aufgabe erfolgt mit einem Verfahren mit den Merkmalen des Patentanspruchs 1. Vorrichtungsmäßig erfolgt die Lösung der Aufgabe mit einer Vorrichtung mit den Merkmalen des Patentanspruches 4. Vorteilhafte Ausgestaltungen der Erfindung sind in den Unteransprüchen angegeben.

Bei einem Verfahren zum Aufbringen von Zierstreifen auf einen Sitzbezug durch Hochfrequenzschweißen ist vorgesehen, dass in eine Werkzeughälfte mit parallel zueinander ausgerichteten Elektroden und die Elektroden trennenden, parallel ausgerichteten Isolatoren Zierstreifen eingelegt werden, dass ein Sitzbezug auf die erste Werkzeughälfte mit den parallel zueinander eingelegten Zierstreifen aufgelegt wird, dass eine zweite Werkzeughälfte auf den Sitzbezug aufgelegt wird, dass zwischen die Elektroden der ersten Werkzeughälfte und der zweiten Werkzeughälfte eine Hochfrequenzwechselspannung angelegt wird, so dass die Zierstreifen auf den Sitzbezug geschweißt werden, dass die erste Werkzeughälfte und die zweite Werkzeughälfte während des Hochfrequenzschweißens mit einem Druck gegeneinander gepresst werden, und dass die Isolatoren, die bei Beginn des Verfahrens über die Elektroden hinausstehen, beim Zusammenpressen nach unten geschoben werden, so dass der Höhenunterschied zwischen den Isolatoren und den Elektroden kleiner wird. Dadurch ist es möglich, Zierstreifen exakt justiert und parallel zueinander auf Sitzbezüge aufzuschweißen.

Die Werkzeughälften werden während des Hochfrequenzschweißens mit Druck zusammengepresst. Bevorzugt erfolgt dies mit einer hydraulischen Presse. Dabei wird bevorzugt eine Druckkraft zwischen 15 und 20 Kilonewton ausgeübt.

Zu Beginn des Verfahrens stehen die Isolatoren gegenüber den Elektroden hervor, so dass die Zierstreifen zwischen die Isolatoren eingelegt werden können. Die Isolatoren sind gegenüber den Elektroden höhenverschiebbar ausgebildet und werden während des Verfahrens nach unten gedrückt.

Bevorzugt werden die Isolatoren soweit nach unten gedrückt, dass bei Abschluss des Verfahrens die Oberflächen der Isolatoren und der Elektroden eine gemeinsame Fläche oder Ebene ausbilden.

In einer alternativen bevorzugten Ausgestaltung werden die Isolatoren so weit abgesenkt, dass bei Abschluss des Verfahrens die Elektroden mit den darauf aufgelegten Zierstreifen über die Isolatoren hinausstehen.

Die Verschiebung der Isolatoren kann entweder durch unterhalb der Isolatoren angeordnete Federelemente erreicht werden. In diesem Fall würden die Isolatoren im Wesentlichen passiv nach unten verschoben. Dies wird durch das Zusammenführen der beiden Werkzeughälften bewirkt. Alternativ ist es auch möglich, die Isolatoren aktiv abzusenken, beispielsweise durch hydraulische oder pneumatische Elemente.

In einer weiteren bevorzugten Ausgestaltung der Erfindung sind entweder an der ersten Werkzeughälfte oder an der zweiten Werkzeughälfte Anschläge vorgesehen, mit denen das Zusammenführen der Werkzeughälften bis zu dem Anschlag und damit bis zu einer definierten Annäherung erfolgt.

Bei einer Vorrichtung zum Aufbringen von Zierstreifen auf einen Sitzbezug durch Hochfrequenzschweißen mit zwei Werkzeughälften, von denen eine mindestens eine Elektrode aufweist, ist vorgesehen, dass eine erste Werkzeughälfte mindestens zwei parallel zueinander ausgerichtete Elektroden aufweist, die in ihrer Breite an die Breite der aufzubringenden Zierstreifen angepasst sind, dass zwischen den Elektroden und parallel an den Außenseiten der Elektroden parallel ausgerichtete Isolatoren angeordnet sind und dass die Isolatoren die Elektroden in Richtung der zweiten Werkzeughälfte überragen. Dadurch können die aufzubringenden Zierstreifen unmittelbar auf den Elektroden aufgelegt werden und sind dort sicher gehalten und geführt. Eine sehr genaue Platzierung und parallele Ausrichtung von Zierstreifen ist dadurch möglich. Auf n Elektroden kommen daher n+1 Isolatoren. Die Vorrichtung dient bevorzugt der Durchführung des oben beschriebenen Verfahrens.

Bevorzugt sind die Isolatoren gegenüber den Elektroden höhenverschiebbar ausgebildet. Besonders bevorzugt ist die Höhenverschiebbarkeit derart ausgebildet, dass die zunächst gegenüber den Elektroden in Richtung des zweiten Werkstücks vorstehenden Isolatoren soweit verschiebbar sind, bis die Elektroden und die Isolatoren auf ihrer Oberseite eine gemeinsame Ebene ausbilden.

In einer bevorzugten Ausgestaltung weisen alle Elektroden dieselbe Höhe auf. Ebenso weisen alle Isolatoren bevorzugt dieselbe Höhe auf. Dadurch wird ein einheitlicher und sicherer Auftrag der Zierstreifen auf den Sitzbezug erreicht. In einer anderen bevorzugten Ausgestaltung der Erfindung sind vier Elektroden vorgesehen. Damit können also bevorzugt vier parallele Zierstreifen aufgebracht werden. Bevorzugt sind die beiden mittleren Elektroden breiter als die beiden äußeren Elektroden. Bevorzugt sind die beiden mittleren Elektroden im Verhältnis 3:2 breiter als die äußeren Elektroden. In einer bevorzugten Ausgestaltung der Erfindung ist der Abstand zwischen zwei mittleren Elektroden kleiner als der Abstand zwischen einer mittleren und einer äußeren Elektrode. Dadurch können besonders dynamische optische Effekte erzielt werden. Dies wird durch eine entsprechende Gestaltung der Breite der Isolatoren zwischen den Elektroden erreicht. Günstigerweise sind die Elektroden stangenartig ausgebildet. Die einzelnen Elektroden sind dann bevorzugt leitend miteinander verbunden, so dass das Anlegen der Hochfrequenzspannung an die einzelnen Elektroden besonders einfach ist, nämlich im Grunde nur an einer Stelle angelegt werden muss, da die Elektroden leitend miteinander verbunden sind. Bevorzugt sind die Isolatoren ebenfalls stangenartig ausgebildet. Bei einer solchen Ausgestaltung können die Elektroden und Isolatoren einfach und günstig lösbar miteinander verbunden werden. Insbesondere können Schraub- oder Klemmverbindungen vorgenommen werden, mit denen Elektroden und Isolatoren je nach gewünschtem Muster miteinander in Verbindung gebracht werden.

In einer anderen bevorzugten Ausgestaltung weist die zweite Werkzeughälfte einen erhöhten Flächenbereich auf, der dem auf der ersten Werkzeughälfte von den Elektroden und Isolatoren gebildeten Bericht entspricht. Die beiden Werkzeughälften sind auf diese Weise zusammenführbar.

In einer besonders bevorzugten Ausgestaltung ist der erhöhte Flächenbereich gegenüber der übrigen zweiten Werkzeughälfte, insbesondere einer Platte der zweiten Werkzeughälfte, beweglich, jedoch mit einer Vorspannung verbunden. Beispielsweise kann dieser erhöhte Flächenbereich durch mehrere Federn, insbesondere Druckfedern, mit der Platte der zweiten Werkzeughälfte verbunden sein. Dadurch ergibt sich der Effekt, dass die zweite Werkzeughälfte beim Zusammenführen schon von Beginn an auf der ersten Werkzeughälfte, insbesondere den zunächst hochstehenden Isolatoren, aufliegt und dann beim Zusammenschieben der Druck über die Druckfeder kontinuierlich erhöht wird. Bevorzugt liegt im letzten Stadium des Aufeinanderpressens der erhöhte Flächenbereich dann unmittelbar an der Platte an, das heißt, dass die Druckfedern dann vollständig zusammengeschoben sind.

Nachfolgend wird die Erfindung anhand eines in der Zeichnung dargestellten Ausführungsbeispiels weiter erläutert. Im Einzelnen zeigen die schematischen Darstellungen in:
- Fig. 1:: eine perspektivische Ansicht eines Autositzes;
- Fig. 2:: eine perspektivische Ansicht der ersten Werkzeughälfte;
- Fig. 3 und 4:: Ansichten der Elektroden und Isolatoren auf der ersten Werkzeughälfte;
- Fig. 5:: die Oberseite der zweiten Werkzeughälfte;
- Fig. 6:: die Unterseite der zweiten Werkzeughälfte;
- Fig. 7:: die erste Werkzeughälfte und die zweite Werkzeughälfte in Position zueinander; und
- Fig. 8 bis 11:: jeweils einen Querschnitt durch das Werkzeug in verschiedenen aufeinanderfolgenden Verfahrensstadien.

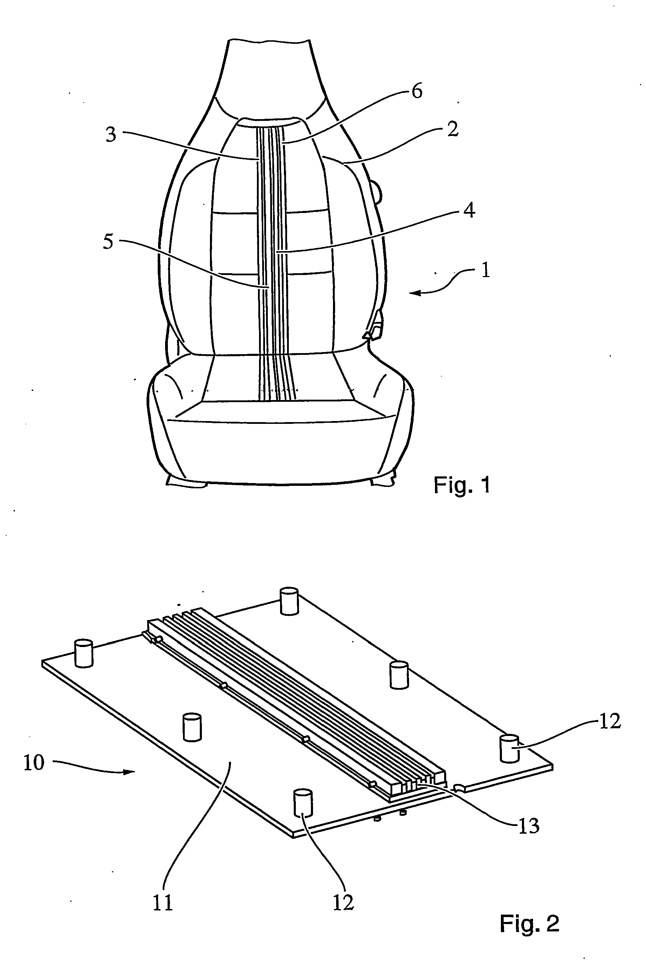

In Fig. 1 ist ein Autositz 1 mit einem Sitzbezug 2 dargestellt, auf dem Zierstreifen 3, 4, 5 und 6 aufgebracht sind. Die Zierstreifen 3 bis 6 sind bevorzugt aus einem Mikrofasermaterial hergestellt. Die beiden mittleren Zierstreifen 4 und 5 sind dabei um den Faktor 1,5 breiter als die beiden äußeren Zierstreifen 3 und 6. Der Abstand zwischen den beiden mittleren Zierstreifen 3 und 4 ist deutlich kleiner als der Abstand zwischen den mittleren und den äußeren Zierstreifen 4, 5 bzw. 3, 6, also beispielsweise zwischen den Zierstreifen 5 und 6. Die Zierstreifen 3 bis 6 verlaufen über den gesamten Sitzbezug 2 parallel zueinander. Die Zierstreifen 3 bis 6 erstrecken sich sowohl über die Rückenlehne, als auch über den unteren eigentlichen Sitzteil des Sitzbezugs 2.

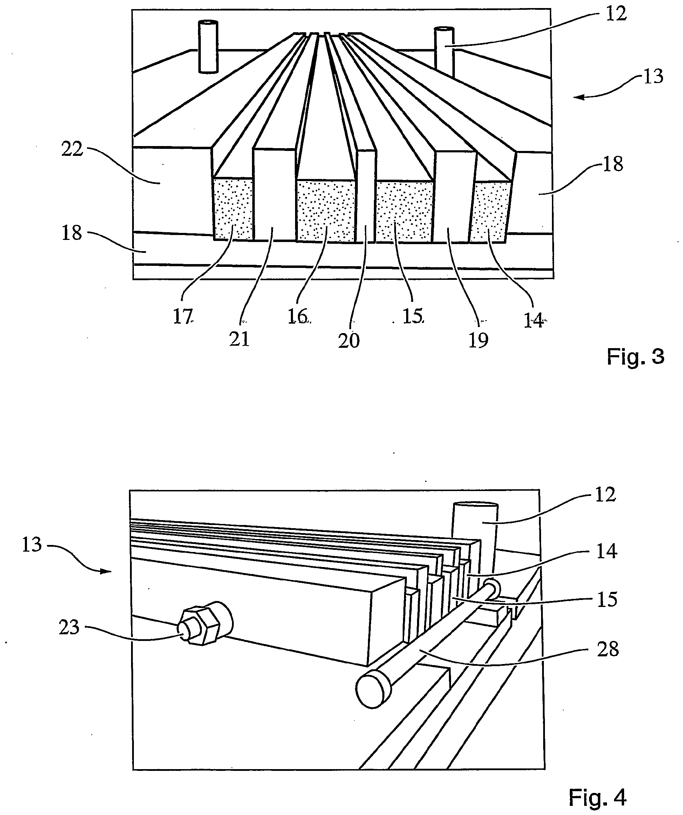

In Fig. 2 ist eine erste Werkzeughälfte 10 dargestellt, mit der die in Fig. 1 dargestellten Zierstreifen 3 bis 6 auf dem Sitzbezug 2 positioniert und dort durch Hochfrequenzschweißen aufgebracht werden. Die erste Werkzeughälfte 10 weist eine Grundplatte 11 sowie insgesamt sechs Abstandshalter 12 auf, die zur genauen Abstandspositionierung zu einer aufzubringenden zweiten Werkzeughälfte dienen. Zwischen den Abstandshaltern 12 ist ein Elektroden- und Isolatorenbereich 13 vorgesehen. Dieser erstreckt sich auf der Grundplatte 11 und dient zur Aufnahme und Positionierung der Zierstreifen 3 bis 6. Der Elektroden- und Isolatorenbereich 13 wird unter Bezugnahme auf die Fig. 3 und 4 im Folgenden weiter erläutert. Insgesamt sind vier stangenartige metallische Elektroden vorhanden. Diese sind mit 14, 15, 16 und 17 gekennzeichnet. Die Elektroden 14 bis 17 sind elektrisch leitend und werden von einer elektrischen Verbindungsstange 18 kontaktiert, über die ein Hochfrequenzfeld an die Elektroden 14 bis 17 angelegt wird. Die Breite und Ausrichtung und Anordnung der Elektroden 14 bis 17 entspricht der Breite und Positionierung der aufzubringenden Zierstreifen 3 bis 6. Die Elektroden 14 bis 17 sind durch Isolatoren 18 und 22, die die äußere Begrenzung bilden, voneinander getrennt, während die Isolatoren 19, 20 und 21 die Elektroden 14 bis 17 untereinander trennen. Die Isolatoren 18 bis 22 sind stangenartig ausgebildet und überragen die Elektroden 14 bis 17. Dadurch ergeben sich schienenartige Einlegebereiche für die aufzunehmenden Zierstreifen 3 bis 6 unmittelbar auf den Elektroden 14 bis 17. Die Isolatoren 18 bis 22 sind etwas kürzer als die Elektroden 14 bis 17 ausgebildet, so dass diese an der Stirnseite vorstehen und in unmittelbaren Kontakt zu der Kontaktstange 28 treten können. Wie insbesondere in Fig. 4 zu erkennen ist, sind Elektroden und Isolatoren durch eine Schraubverbindung 23 miteinander verbunden. Diese ist lösbar und es können auf einfache Weise unterschiedliche Kombinationen und Abfolgen von Zierstreifen hergestellt werden, indem die Zahl der Elektroden verändert wird oder Elektroden mit anderen Breiten oder Isolatoren mit anderen Breiten verwendet werden.

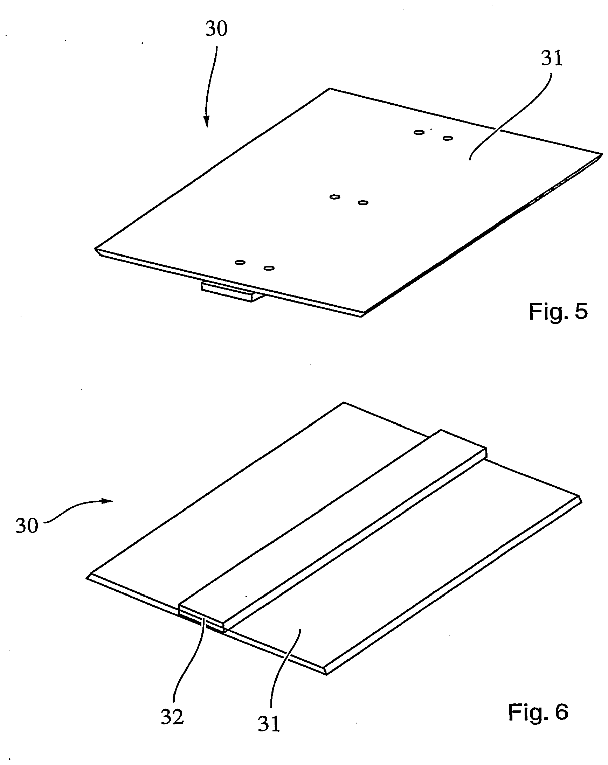

In Fig. 5 ist die Oberansicht der zweiten Werkzeughälfte 30 dargestellt, die im Wesentlichen aus einer Platte 31 besteht. In Fig. 6 ist die Unteransicht der zweiten Werkzeughälfte 30 dargestellt. Diese weist einen zusätzlichen plattenartigen erhöhten Bereich 32 auf, der in seiner Größe und Abmessung dem Elektroden- und Isolatorenbereich 13 auf der ersten Werkzeughälfte 10 entspricht.

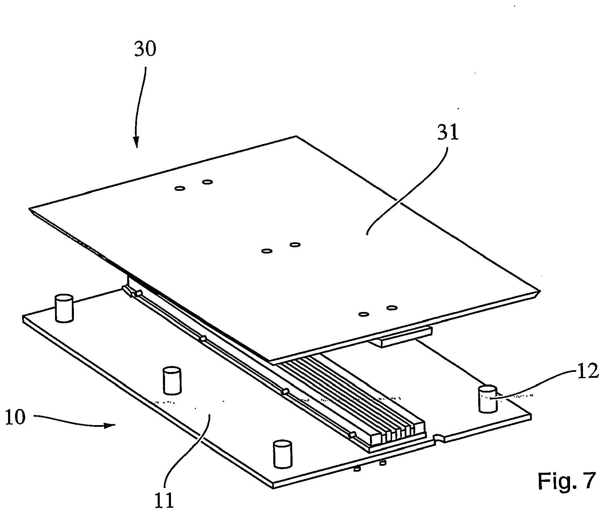

In Fig. 7 sind die beiden Werkzeughälften 10 und 30 im Verhältnis zueinander dargestellt. Zwischen die Werkzeughälften 10, 30 wird der Stoff oder Sitzbezug eingelegt und die auf den Elektroden 14 bis 17 aufgelegten Zierstreifen 3 bis 6 werden dann durch Hochfrequenzschweißen auf den darüber angeordneten Sitzbezug 2 aufgebracht. Hierzu wird ein Hochfrequenzgenerator mit typischerweise 15 bis 30 kW verwendet. Die Werkzeughälften 10 und 30 werden mit Hilfe von hydraulischen Pressen gegeneinander gepresst. Dabei wird die obere Werkzeughälfte 30 typischerweise befestigt, während die untere Werkzeughälfte 10 gegen die obere Werkzeughälfte 30 gepresst wird.

Verfahrensmäßig werden die Zierstreifen 3 bis 6 auf die parallel zueinander ausgerichteten Elektroden 14 bis 17 aufgelegt, so dass diese zwischen den parallelen Isolatoren 18 bis 22 liegen und dort gerade und parallel ausgerichtet sind. Auf die erste Werkzeughälfte 10 mit den auf den Elektroden 14 bis 17 aufliegenden Zierstreifen 3 bis 6 wird dann ein Sitzbezug 2 aufgelegt. Auf den Sitzbezug 2 wird dann die zweite Werkzeughälfte 30 aufgelegt. An die Elektroden 14 bis 17 wird eine hochfrequente Spannung angelegt, wobei dies über die Kontaktstange 28 erfolgen kann. Durch die hochfrequente Wechselspannung zwischen den Elektroden 14 bis 17 und der zweiten Werkzeughälfte 30 werden die Zierstreifen 3 bis 6 auf den Sitzbezug 2 aufgeschweißt. Gleichzeitig wird mit einer hydraulischen Presse, die eine Druckkraft von etwa 15 bis 20 Kilonewton ausübt, die erste Werkzeughälfte 10 gegen die zweite Werkzeughälfte 30 gepresst. Bevorzugt übt die hydraulische Presse einen Druck zwischen einer unteren, sich nach oben bewegenden Platte, und einer festen oberen Platte aus. Die erste Werkzeughälfte 10 ist bevorzugt die untere, nach oben gepresste Platte.

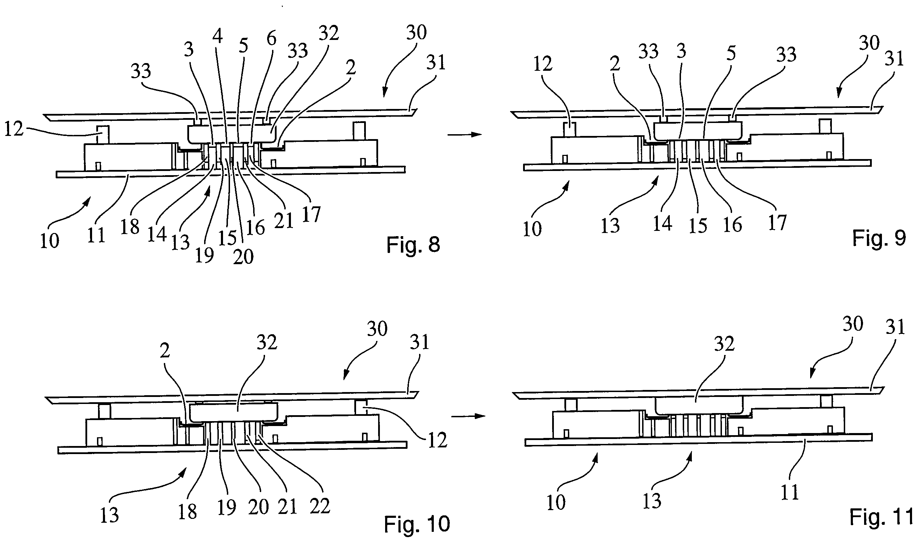

Im Detail kann der Verfahrensablauf anhand der Figuren 8 bis 11 so beschrieben werden, dass die hydraulische Presse zunächst nicht den vollen Druck ausübt, sondern zunächst nur die zweite Werkzeughälfte 30, insbesondere der plattenartig erhöhte Flächenbereich 32 der zweiten Werkzeughälfte 30, der plattenartig erhöhte Flächenbereich 32 mit der ersten Werkzeughälfte 10, dort insbesondere den Isolatoren 18 bis 22, in Kontakt ist. Der plattenartig erhöhte Flächenbereich 32 ist durch Druckfedern 33 gegenüber der Platte 31 vorgespannt. Bei zunehmender Druckausübung zwischen der ersten Werkzeughälfte 10 und der zweiten Werkzeughälfte 30 werden dann die Isolatoren 18 bis 22 so weit abgesenkt, dass diese mit den Elektroden 14 bis 17 eine Ebene ausbilden. Zu diesem Zeitpunkt liegen dann die Zierstreifen 3 bis 6 mit dem darüber aufgelegten Sitzbezug 2 an der zweiten Werkzeughälfte 30 an. Insbesondere in dieser Position kann das Hochfrequenzfeld angelegt werden und eine Verschweißung der Zierstreifen 3 bis 6 mit dem Sitzbezug 2 erfolgen. Bei weiterer Erhöhung des Drucks zwischen der ersten Werkzeughälfte 10 und der zweiten Werkzeughälfte 30 wird der plattenartig erhöhte Flächenbereich 32 immer stärker gegen die Platte 30 gedrückt, bis diese dort vollständig anliegt und der minimale Abstand zwischen den beiden Werkzeughälften 10, 30 erreicht wird, der durch Abstandshalter 12 vorgegeben ist. Bevorzugt werden parallel die Isolatoren 18 bis 22 noch weiter abgesenkt, bis die Elektroden 14 bis 17 mit dem darauf aufliegenden Sitzbezug 2 mit den angeschweißten Zierstreifen 3 bis 6 über die Isolatoren 14 bis 17 hinausstehen. Parallel dazu werden die Druckfedern 33 immer weiter zusammengepresst. In die Werkzeughälften 10 und 30 in ihrer Endposition sind, die durch die Abstandshalter 12 vorgegeben ist, und der maximale Druck ausgeübt ist, sind die Druckfedern 33 weitestgehend zusammengedrückt.

### Bezugszahlenliste:

- 1: Autositz
- 2: Sitzbezug
- 3: Zierstreifen
- 4: Zierstreifen
- 5: Zierstreifen
- 6: Zierstreifen
- 10: Werkzeughälfte
- 11: Grundplatte
- 12: Abstandshalter
- 13: Elektroden- und Isolatorenbereich
- 14: Elektroden
- 15: Elektroden
- 16: Elektroden
- 17: Elektroden
- 18: Isolatoren
- 19: Isolatoren
- 20: Isolatoren
- 21: Isolatoren
- 22: Isolatoren
- 23: Schraubverbindung
- 28: Kontaktstange
- 30: Werkzeughälfte
- 31: Platte
- 32: plattenartiger erhöhter Flächenbereich
- 33: Druckfedern

## Patentansprüche

1. Verfahren zum Aufbringen von Zierstreifen (3, 4, 5, 6) auf einen Sitzbezug (2) durch Hochfrequenzschweißen, wobei in eine erste Werkzeughälfte (10) mit parallel zueinander ausgerichteten Elektroden (14, 15, 16, 17) und die Elektroden trennenden Isolatoren (18, 19, 20, 21, 22) Zierstreifen (3, 4, 5, 6) eingelegt werden, ein Sitzbezug (2) auf die erste Werkzeughälfte (10) mit den parallel zueinander eingelegten Zierstreifen (3, 4, 5, 6) aufgelegt wird, eine zweite Werkzeughälfte (30) auf den Sitzbezug (2) aufgelegt wird, zwischen den Elektroden (14, 15, 16, 17) der ersten Werkzeughälfte (10) und der zweiten Werkzeughälfte (30) eine hochfrequente Wechselspannung angelegt wird, so dass die Zierstreifen (3, 4, 5, 6) auf den Sitzbezug (2) geschweißt werden, und die erste Werkzeughälfte (10) und die zweite Werkzeughälfte (30) während des Hochfrequenzschweißens mit einem Druck gegeneinander gepresst werden,
**dadurch gekennzeichnet,**
**dass** die parallel ausgerichteten Isolatoren (18, 19, 20, 21, 22), die bei Beginn des Verfahrens über die Elektroden (14, 15, 16, 17) hinausstehen, beim Zusammenpressen nach unten geschoben werden, so dass der Höhenunterschied zwischen den Isolatoren (18, 19, 20, 21, 22) und den Elektroden (14, 15, 16, 17) kleiner wird.

2. Verfahren nach einem der vorgehenden Ansprüche, **dadurch gekennzeichnet, dass** die Isolatoren (18, 19, 20, 21, 22) gegenüber den Elektroden (14, 15, 16, 17) höhenverschiebbar sind und während des Verfahrens derart verschoben werden, dass die Isolatoren (18, 19, 20, 21, 22) und die Elektroden (14, 15, 16, 17) bei Abschluss des Verfahrens an ihrer Oberseite eine Ebene ausbilden.

3. Verfahren nach einem der Ansprüche 1 und 2, **dadurch gekennzeichnet, dass** die Isolatoren (18, 19, 20, 21, 22) gegenüber den Elektroden (14, 15, 16, 17) höhenverschiebbar sind und während des Verfahrens derart verschoben werden, dass die Isolatoren (18, 19, 20, 21, 22) bei Abschluss des Verfahrens mit ihrer Oberseite tiefer sind als die Elektroden (14, 15, 16, 17).

4. Vorrichtung zum Aufbringen von Zierstreifen auf einem Sitzbezug (2) durch Hochfrequenzschweißen mit zwei Werkzeughälften (10, 30), von denen eine mindestens eine Elektrode (14, 15, 16, 17) aufweist, wobei eine erste Werkzeughälfte (10) mindestens zwei parallel zueinander ausgerichtete Elektroden (15, 16) aufweist, die in ihrer Breite an die Breite der aufzubringenden Zierstreifen (3, 4, 5, 6) angepasst sind, und zwischen den Elektroden (14, 15, 16, 17) und parallel an den Außenseite der Elektroden (14, 17) parallel ausgerichtete Isolatoren (18, 19, 20, 21, 22) angeordnet sind,
**dadurch gekennzeichnet,**
**dass** die Isolatoren (18, 19, 20, 21, 22) die Elektroden (14, 15, 16, 17) in Richtung der zweiten Werkzeughälfte (30) überragen, und
**dass** die Isolatoren (18, 19, 20, 21, 22) gegenüber den Elektroden (14, 15, 16, 17) höhenverschiebbar sind.

5. Vorrichtung nach Anspruch 4, **dadurch gekennzeichnet, dass** die Isolatoren (18, 19, 20, 21, 22) von der die Elektroden (14, 15, 16, 17) in Richtung der zweiten Werkzeughälfte überragenden Position bis zu einer Position verschiebbar sind, in der die Isolatoren (18, 19, 20, 21, 22) und die Elektroden (14, 15, 16, 17) eine gemeinsame Ebene ausbilden.

6. Vorrichtung nach einem der Ansprüche 4 oder 5, **dadurch gekennzeichnet, dass** zwei mittlere Elektroden (15, 16) breiter sind als zwei äußere Elektroden (14, 17).

7. Vorrichtung nach einem der Ansprüche 4 bis 6, **dadurch gekennzeichnet, dass** der Abstand zwischen zwei mittleren Elektroden (15, 16) kleiner ist als der Abstand zwischen einer mittleren Elektrode (16) und einer äußeren Elektrode (17).

8. Vorrichtung nach einem der Ansprüche 4 bis 7, **dadurch gekennzeichnet, dass** die Elektroden (14, 15, 16, 17) stangenartig ausgebildet sind.

9. Vorrichtung nach einem der Ansprüche 4 bis 8, **dadurch gekennzeichnet, dass** die Elektroden (14, 15, 16, 17) untereinander leitend verbunden sind.

10. Vorrichtung nach einem der Ansprüche 4 bis 9, **dadurch gekennzeichnet, dass** die Isolatoren (18, 19, 20, 21, 22) stangenartig ausgebildet sind.

11. Vorrichtung nach einem der Ansprüche 4 bis 10, **dadurch gekennzeichnet, dass** die Isolatoren (18 bis 22) und die Elektroden (14 bis 17) lösbar miteinander verbunden sind.

12. Vorrichtung nach einem der Ansprüche 4 bis 11, **dadurch gekennzeichnet, dass** die zweite Werkzeughälfte (30) einen erhöhten Flächenbereich (32) aufweist, der dem auf der ersten Werkzeughälfte (10) von den Elektroden (14 bis 17) und den Isolatoren (18 bis 22) gebildeten Bereich entspricht.

13. Vorrichtung nach Anspruch 12, **dadurch gekennzeichnet, dass** der erhöhte Flächenbereich (32) der zweiten Werkzeughälfte (30) beweglich an der zweiten Werkzeughälfte (30) angeordnet ist.

## Claims

1. A method for applying decorative strips (3, 4, 5, 6) to a seat cover (2) by means of high-frequency welding, wherein decorative strips (3, 4, 5, 6) are inserted in a first tool half (10) comprising electrodes (14, 15, 16, 17) aligned parallel to one another and insulators (18, 19, 20, 21, 22) separating the electrodes, a seat cover (2) is applied on the first tool half (10) with the decorative strips (3, 4, 5, 6) inserted parallel to one another, and a second tool half (30) is applied on the seat cover (2), a high-frequency alternating voltage is applied between the electrodes (14, 15, 16, 17) of the first tool half (10) and the second tool half (30), so that the decorative strips (3, 4, 5, 6) are welded on the seat cover (2), and the first tool half (10) and the second tool half (30) are pressed against one another with a pressure during the high-frequency welding,
**characterised in that**
the insulators (18, 19, 20, 21, 22) aligned in parallel, which at the start of the process project above the electrodes (14, 15, 16, 17), are pushed downwards during the pressing together, so that the height difference between the insulators (18, 19, 20, 21, 22) and the electrodes (14, 15, 16, 17) becomes smaller.

2. The method according to any one of the preceding claims, **characterised in that** the insulators (18, 19, 20, 21, 22) are height-adjustable with respect to the electrodes (14, 15, 16, 17) and are displaced during the process in such a way that the insulators (18, 19, 20, 21, 22) and the electrodes (14, 15, 16, 17) form a plane at their upper side when the process is completed.

3. The method according to any one of claims 1 and 2, **characterised in that** the insulators (18, 19, 20, 21, 22) are height-adjustable with respect to the electrodes (14, 15, 16, 17) and displaced during the process in such a way that the insulators (18, 19, 20, 21, 22) are lower than the electrodes (14, 15, 16, 17) when the process is completed.

4. A device for applying decorative strips on a seat cover (2) by means of high-frequency welding with two tool halves (10, 30), one whereof comprises at least one electrode (14, 15, 16, 17), wherein a first tool half (10) comprises at least two electrodes (15, 16) aligned parallel to one another, which are matched in their width to the width of the decorative strips (3, 4, 5, 6) to be applied, and insulators (18, 19, 20, 21, 22) aligned in parallel are arranged between the electrodes (14, 15, 16, 17) and parallel to the outer side of the electrodes (14, 17),
**characterised in that**
the insulators (18, 19, 20, 21, 22) project above the electrodes (14, 15, 16, 17) in the direction of the second tool half (30), and
that the insulators (18, 19, 20, 21, 22) are height-adjustable with respect to the electrodes (14, 15, 16, 17) .

5. The device according to claim 4, **characterised in that** the insulators (18, 19, 20, 21, 22) can be displaced from the position projecting above the electrodes (14, 15, 16, 17) in the direction of the second tool half to a position in which the insulators (18, 19, 20, 21, 22) and the electrodes (14, 15, 16, 17) form a common plane.

6. The device according to any one of claims 4 or 5, **characterised in that** two middle electrodes (15, 16) are wider than two outer electrodes (14, 17).

7. The device according to any one of claims 4 to 6, **characterised in that** the distance between two central electrodes (15, 16) is smaller than the distance between a middle electrode (16) and an outer electrode (17) .

8. The device according to any one of claims 4 to 7, **characterised in that** the electrodes (14, 15, 16, 17) are constituted rod-like.

9. The device according to any one of claims 4 to 8, **characterised in that** the electrodes (14, 15, 16, 17) are connected to one another in a conducting manner.

10. The device according to any one of claims 4 to 9, **characterised in that** the insulators (18, 19, 20, 21, 22) are constituted rod-like.

11. The device according to any one of claims 4 to 10, **characterised in that** the insulators (18 to 22) and the electrodes (14 to 17) are connected to one another detachably.

12. The device according to any one of claims 4 to 11, **characterised in that** the second tool half (30) comprises a raised surface area (32), which corresponds to the area formed on the first tool half (10) by the electrodes (14 to 17) and the insulators (18 to 22).

13. The device according to claim 12, **characterised in that** the raised surface area (32) of the second tool half (30) is arranged movably on the second tool half (30) .

## Revendications

1. Procédé pour appliquer des bandes décoratives (3, 4, 5, 6) sur une garniture de véhicule (2) par soudage à haute fréquence, dans lequel des bandes décoratives (3, 4, 5, 6) sont placées dans une première moitié d'outil (10) avec des électrodes (14, 15, 16, 17) orientées parallèlement entre elles et des isolateurs (18, 19, 20, 21, 22) séparant les électrodes, une garniture de siège (2) est posée sur la première moitié d'outil (10) avec les bandes décoratives (3, 4, 5, 6) placées parallèlement entre elles, une deuxième moitié d'outil (30) est posée sur la garniture de siège (2), une tension alternative de haute fréquence est appliquée entre les électrodes (14, 15, 16, 17) de la première moitié d'outil (10) et la deuxième moitié d'outil (30) de sorte que les bandes décoratives (3, 4, 5, 6) sont soudées sur la garniture de siège (2), et la première moitié d'outil (10) et la deuxième moitié d'outil (30) sont pressées l'une contre l'autre avec une pression pendant le soudage à haute fréquence,
**caractérisé en ce**
**que** les isolateurs (18, 19, 20, 21, 22) orientés parallèlement, lesquels font saillie par rapport aux électrodes (14, 15, 16, 17) au début du procédé, sont déplacés vers le bas lors de la compression de sorte que la différence de hauteur entre les isolateurs (18, 19, 20, 21, 22) et les électrodes (14, 15, 16, 17) diminue.

2. Procédé selon l'une des revendications précédentes, **caractérisé en ce que** les isolateurs (18, 19, 20, 21, 22) sont déplaçables en hauteur par rapport aux électrodes (14, 15, 16, 17) et sont déplacés pendant le procédé de manière à ce que les isolateurs (18, 19, 20, 21, 22) et les électrodes (14, 15, 16, 17) forment un plan au niveau de leur côté supérieur à l'achèvement du procédé.

3. Procédé selon l'une des revendications 1 et 2, **caractérisé en ce que** les isolateurs (18, 19, 20, 21, 22) sont déplaçables en hauteur par rapport aux électrodes (14, 15, 16, 17) et sont déplacés pendant le processus de manière à ce que les isolateurs (18, 19, 20, 21, 22) sont plus bas avec leur côté supérieur que les électrodes (14, 15, 16, 17) à l'achèvement du procédé.

4. Dispositif pour l'application de bandes décoratives sur une garniture de siège (2) par soudage à haute fréquence avec deux moitiés d'outil (10, 30) dont au moins une présente au moins une électrode (14, 15, 16, 17), dans lequel une première moitié d'outil (10) présente au moins deux électrodes (15, 16) orientées parallèlement entre elles, lesquelles sont adaptées concernant leur largeur à la largeur des bandes décoratives (3, 4, 5, 6) à appliquer, et entre les électrodes (14, 15, 16, 17) et parallèlement sur les côtés extérieurs des électrodes (14, 17), des isolateurs (18, 19, 20, 21, 22) orientés parallèlement sont disposés,
**caractérisé en ce**
**que** les isolateurs (18, 19, 20, 21, 22) font saillie par rapport aux électrodes (14, 15, 16, 17) en direction de la deuxième moitié d'outil (30) et
**que** les isolateurs (18, 19, 20, 21, 22) sont déplaçables en hauteur par rapport aux électrodes (14, 15, 16, 17).

5. Dispositif selon la revendication 4, **caractérisé en ce que** les isolateurs (18, 19, 20, 21, 22) sont déplaçables de la position en saillie par rapport aux électrodes (14, 15, 16, 17) en direction de la deuxième moitié d'outil jusqu'à une position dans laquelle les isolateurs (18, 19, 20, 21, 22) et les électrodes (14, 15, 16, 17) forment un plan commun.

6. Dispositif selon l'une des revendications 4 ou 5, **caractérisé en ce que** deux électrodes (15, 16) du milieu sont plus larges que deux électrodes (14, 17) extérieures.

7. Dispositif selon l'une des revendications 4 à 6, **caractérisé en ce que** la distance entre deux électrodes du milieu (15, 16) est plus petite que la distance entre une électrode du milieu (16) et une électrode extérieure (17).

8. Dispositif selon l'une des revendications 4 à 7, **caractérisé en ce que** les électrodes (14, 15, 16, 17) sont réalisées à la manière de barres.

9. Dispositif selon l'une des revendications 4 à 8, **caractérisé en ce que** les électrodes (14, 15, 16, 17) sont reliées de manière conductrice entre elles.

10. Dispositif selon l'une des revendications 4 à 9, **caractérisé en ce que** les isolateurs (18, 19, 20, 21, 22) sont réalisés à la manière de barres.

11. Dispositif selon l'une des revendications 4 à 10, **caractérisé en ce que** les isolateurs (18 à 22) et les électrodes (14 à 17) sont reliés de manière détachable entre eux.

12. Dispositif selon l'une des revendications 4 à 11, **caractérisé en ce que** la deuxième moitié d'outil (30) présente une zone de surface (32) augmentée qui correspond à la zone formée sur la première moitié d'outil (10) par les électrodes (14 à 17) et les isolateurs (18 à 22).

13. Dispositif selon la revendication 12, **caractérisé en ce que** la zone de surface (32) augmentée de la deuxième moitié d'outil (30) est disposée de manière mobile sur la deuxième moitié d'outil (30).
